# EUROPEAN PATENT SPECIFICATION

(11) **EP 0 450 225 B1**
(45) Date of publication and mention of the grant of the patent: **08.11.1995**
(21) Application number: 90310432.1
(22) Date of filing: 24.09.1990
(51) Int. Cl.: G02C 5/00

(54) **Joint to connect together components of spectacles**
Verbindungsstück für Brillenbauteile
Pièce de connexion pour éléments de lunettes

(30) Priority: 03.04.1990 JP 35913/90
(43) Date of publication of application: 09.10.1991
(73) Proprietor: NAKANISHI OPTICAL CO. LTD., Kita-ku, Osaka (JP)
(72) Inventor: Nakanishi, Eiichi, Ashiya, Hyogo (JP)
(74) Representative: Purvis, William Michael Cameron

(56) References cited:
- EP-A- 0 338 586
- WO-A-87/07961
- DE-A- 3 213 738
- FR-A- 2 494 859
- US-A- 4 893 917
- US-A- 4 952 044

## Description

The invention relates to a joint to connect together components of spectacles.

It has been proposed to use stainless steels, nickel-chromium alloys, German silver, phosphor bronze or other metallic materials, to form metal spectacles frames. Recently, pure titanium or some nickel-titanium base alloys (i.e., Ni-Ti alloys) also have been made use of for spectacles frames because they have excellent properties such as mechanical strength, corrosion resistance, spring property or resilience and are light in weight. In particular, Ni-Ti alloys are very useful in this field owing to their excellent characteristics including super elasticity which gives them the so-called "shape memory" property depending upon their compositions.

It is however difficult to solder parts of pure titanium or the Ni-Ti alloys to each other or to other materials. Such metal or alloys thus need to be coated with a nickel plating or other plating before they are soldered to other spectacles parts made of German silver or other readily solderable materials, the plating thereby being interposed for instance between a Ni-Ti alloy phase and German silver phase.

Such interposition of plating between the surfaces of soldered materials bring about insufficient junction strength. It is also disadvantageous to add such a plating step to the process for manufacturing spectacles.

Patent Specification EP-A-338 586 discloses a temple for a pair of spectacles of circular section and made of Ni-Ti alloy onto which temple a cap is fitted and mechanically fixed, the cap being made of a readily solderable metal such as stainless steel and being used for connecting the temple to a hinge.

According to the invention there is provided a joint to connect together components of spectacles, the joint comprising: a tab projecting from a main body of one component of the spectacles which is to be connected to another component; the tab extending from and being integral with the main body which is made of pure titanium or Ni-Ti base alloy, which are difficult to solder, and the tab having recesses formed at opposite side surfaces thereof; and a connecting member made of an easily solderable metal having side walls and a cross section of generally U-shape defining a channel into which the tab can be inserted; portions of the side walls of the connecting member being folded over onto the tab inserted in the channel in such a manner that inner surface portions of the connecting member are pressed into the recesses of the tab whereby the connecting member is secured to the tab, thus allowing said another component to be soldered or welded to the connecting member which is inseparably secured to the tab; the tab and the connecting member being so shaped that upon insertion of the tab into the channel side surfaces of the main body and corresponding side surfaces of the connecting member lie flush with one another.

It will be apparent that though the spectacles component is made of pure titanium or Ni-Ti alloy which are difficult to solder the component can be connected to another spectacles component, without failure, due to the connecting member secured to the component. Mechanical strength of such a joint between the spectacles components can be so high that a strong and durable spectacles assembly is manufactured and at low cost since no plating operation is required.

The invention is diagrammatically illustrated by way of example in the accompanying drawings, in which:
Figure 1 is a perspective view showing members involved in a first embodiment of a joint to connect together components of spectacles according to the invention;
Figures 2 and 3 are a plan view and a front elevation, respectively, which illustrate assembly of members of the joint;
Figure 4 is a perspective view illustrating a completed joint connecting said members;
Figure 5 is another perspective view showing in part a completed joint in an exemplified use;
Figure 6 is a perspective view showing a second embodiment of a joint according to the invention for connecting together components of spectacles; and
Figures 7 and 8 are a plan view and a front elevation, respectively, which illustrate assembly of members involved in a third embodiment of a joint for connecting together components of spectacles according to the invention.

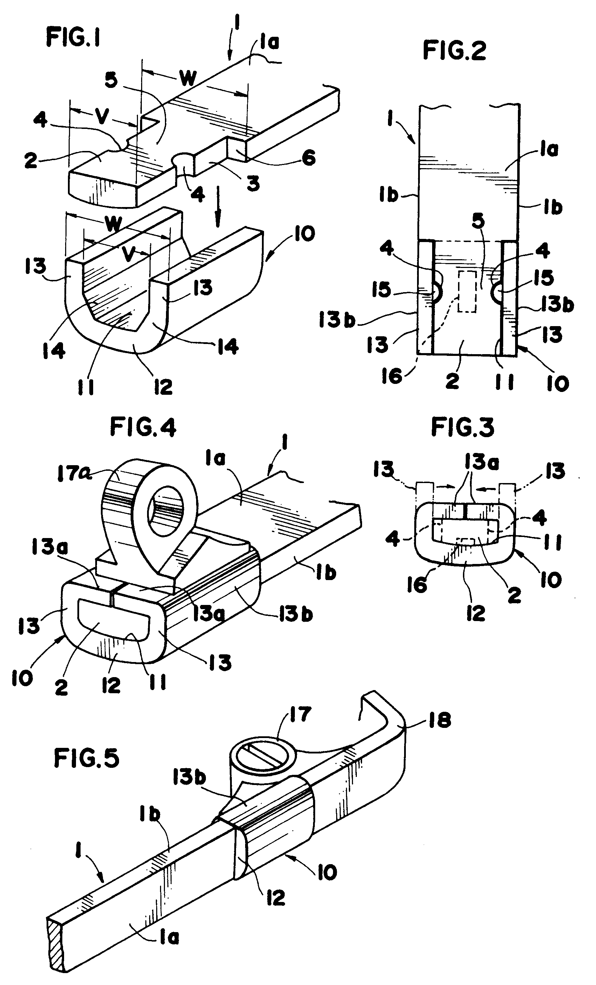

Referring to the drawings and firstly to Figures 1 to 5, a side arm 1 of spectacles is to be connected to another component of the spectacles.

The side arm 1 is an elongate and narrow plate made of a Ni-Ti alloy with super elasticity and shape-memory property. A tab 2 is formed to extend from a main body 1a of the side arm 1 at its portion to be connected, the width "V" of the tab 2 being smaller than the width "W" of the main body 1a. Constricted regions 5 defined by recesses 4 are formed at the opposite sides 3 of the tab 2. Shoulders 6 are formed at boundaries between the main body 1a and the tab 2.

A connecting member 10 is made of easily solderable German silver and is of a U-shape defining a channel 11 into which the tab 2 is to be inserted. Side walls 13 upstanding from sides of a bottom wall 12 of the channel 11 have outer surfaces 13b which are spaced apart by a width equal to the width "W" of the main body 1a. The distance between inner surfaces of the side walls 13 is equal to the width "V" of the tab 2. Angled faces 14 are formed near and integral with the bottom wall 12, so as to continue from the inner surfaces.

In operation, the tab 2 is inserted first into the channel 11 and then strongly pressed toward the bottom wall 12 so that surface material of the angled faces 14 is partially forced into the recesses 4 so as to form engaging lugs 15. The engaging lugs 15 prevent the connecting member 10 from being disengaged in an axial direction of the side arm 1. A recess 16 as indicated by a broken line may be formed in the underside of the tab 2 so that surface material from the bottom wall 12 can be forced into the recess 16 thereby to provide an additional retaining force for the tab 2.

Next, the side walls 13 are bent inwards as shown in Figure 3 so as to form bent portions 13a resting on an upper surface of the tab 2, thereby causing the connecting member 10 rigidly to enclose the tab 2. As a result, side surfaces 1b of the main body 1a of the side arm 1 become flush with the corresponding side surfaces 13b of the connecting member 10.

A hinge member 17a can then be soldered, brazed or welded, as shown in Figure 4, to outer surfaces of the bent portions 13a of the side walls 13 of the connecting member 10, which connecting member 10 has been secured to the side arm 1 at the abovementioned portion to be connected.

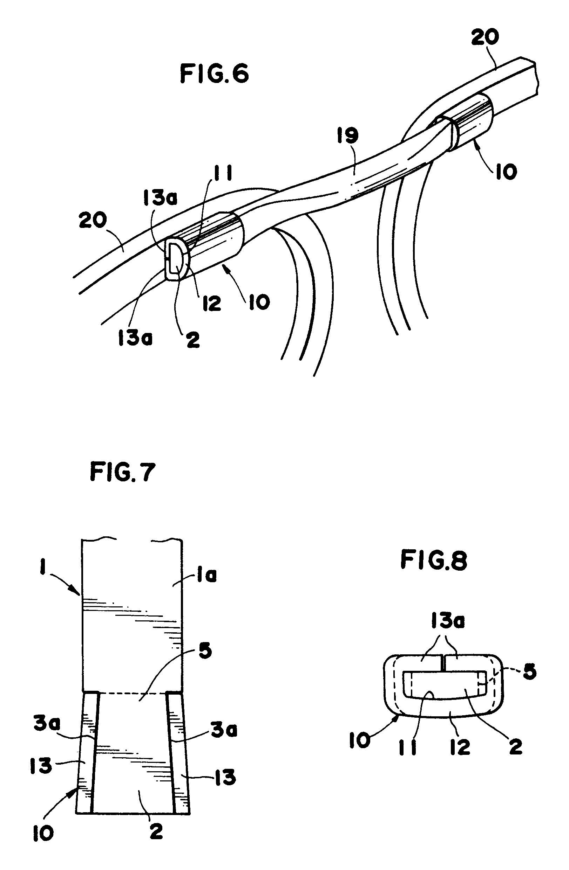

Figure 5 shows a side arm 1 which is subsequently connected by a hinge 17 to a lug 18 extending rearwards from a front frame of a pair of spectacles so as to be pivotally movable relative thereto.

Figure 6 shows another embodiment of the invention applied to a connection between a bridge 19 and a pair of lens rims 20. The bridge 19 is made of a metal of super elasticity, while the pair of rims 20 are made of German silver or the like.

Figures 7 and 8 illustrate another embodiment of the invention wherein a tab 2 has recesses in its side surfaces formed by tapered edges 3a, the distance therebetween increasing towards the free end of the tab 2. Such tapered edges 3a constitute a constricted region 5 in this case. Side surfaces of a connecting member 10 are also tapered corresponding to the tapered edges 3a so that the connecting member once crimped thereon cannot be removed in an axial direction.

## Claims

1. A joint to connect together components of spectacles, the joint comprising: a tab (2) projecting from a main body (1a) of one component (1, 19) of the spectacles which is to be connected to another component (18, 20); the tab (2) extending from and being integral with the main body (1a) which is made of pure titanium or Ni-Ti base alloy, which are difficult to solder, and the tab (2) having recesses (4) formed at opposite side surfaces (3) thereof; and a connecting member (10) made of an easily solderable metal having side walls (13) and a cross section of generally U-shape defining a channel (11) into which the tab (2) can be inserted; portions (13a) of the side walls (13) of the connecting member (10) being folded over onto the tab (2) inserted in the channel (11) in such a manner that inner surface portions of the connecting member (10) are pressed into the recesses (4) of the tab (2) whereby the connecting member (10) is secured to the tab (2), thus allowing said another component (18, 20) to be soldered or welded to the connecting member (10) which is inseparably secured to the tab (2); the tab (2) and the connecting member (10) being so shaped that upon insertion of the tab (2) into the channel (11) side surfaces (1b) of the main body (1a) and corresponding side surfaces (13b) of the connecting member (10) lie flush with one another.

2. A structure according to claim 1, wherein a recess (16) is formed in an undersurface of the tab (2).

## Patentansprüche

1. Verbindungsstück zum Verbinden von Brillenteilen miteinander mit einer von dem Hauptkörper (1a) eines Teils (1, 19) der Brille, welches mit einem anderen Teil (18, 20) zu verbinden ist, vorspringenden Lasche (2), wobei sich die Lasche (2) von dem Hauptkörper (1a), welcher aus reinem Titan oder einer Ni-Ti-Basislegierung besteht, welche schwierig zu löten ist, aus erstreckt und aus einem Stück mit diesem Hauptkörper besteht und die Lasche (2) an einander gegenüberliegenden Seitenoberflächen (3) von ihr Ausnehmungen (4) hat, und einem Verbindungsteil (10) aus einem leicht lötbaren Metall mit Seitenwänden (13) und einem Querschnitt von allgemein U-Form, die einen Kanal (11) begrenzt, in welchen die Lasche (2) eingeführt werden kann, wobei Abschnitte (13a) der Seitenwände (13) des Verbindungsteils (10) über der in den Kanal (11) eingefügten Lasche (2) in der Weise umgefaltet sind, daß die inneren Oberflächenbereiche des Verbindungsteiles (10) in die Ausnehmungen (4) der Lasche (2) gepreßt werden, wobei das Verbindungsteil (10) an der Lasche (2) befestigt ist und so erlaubt, daß das andere Teil (18, 20) an dem Verbindungsteil (10) angelötet oder angeschweißt wird, welches untrennbar an der Lasche (2) befestigt ist, wobei die Lasche (2) und das Verbindungsteil (10) so geformt sind, daß beim Einsetzen der Lasche (2) in den Kanal (11) Seitenoberflächen (1b) des Hauptkörpers (1a) und entsprechende Seitenoberflächen (13b) des Verbindungsteils (10) bündig miteinander liegen.

2. Struktur nach Anspruch 1, bei der eine Ausnehmung (16) in einer Unterseite der Lasche (2) ausgebildet ist.

## Revendications

1. Pièce de connexion pour éléments de lunettes, la pièce comprenant : une languette (2) en projection depuis un corps principal (1a) d'un élément (1, 19) des lunettes qui doit être relié à un autre élément (18; 20); la languette (2) s'étendant d'un seul tenant depuis le corps principal (1a) qui est fait de titane pur ou d'alliage à base de Ni-Ti, qui sont des métaux difficiles à braser, et la languette (2) comportant des évidements (4) formés à ses surfaces latérales opposées (3); et un organe de connexion (10) fait d'un métal pouvant facilement être brasé comportant des parois latérales (13) et une section transversale généralement en forme de U définissant un canal (11) dans lequel la languette (2) peut être insérée; des portions (13a) des parois latérales (13) de l'organe de connexion (10) étant repliées sur la languette (2) insérée dans le canal (11) de manière que des portions de surface interne de l'organe de connexion (10) soient pressées dans les évidements (4) de la languette (2) de sorte que l'organe de connexion (10) soit fixé à la languette (2), ce qui permet audit autre élément (18; 20) d'être brasé ou soudé à l'organe de connexion (10) qui est fixé sans possibilité de séparation à la languette (2); la languette (2) et l'organe de connexion (10) ayant une forme telle que lors de l'insertion de la languette (2) dans le canal (11) les surfaces latérales (1b) du corps principal (1a) et les surfaces latérales correspondantes (13b) de l'organe de connexion (10) soient à fleur.

2. Structure selon la revendication 1, dans laquelle un évidement (16) est formé dans une surface inférieure de la languette (2).
